Europäisches Patentamt

European Patent Office

Office européen des brevets

(19)

(11) Veröffentlichungsnummer: **0 513 504 B1**

# (12) EUROPÄISCHE PATENTSCHRIFT

(45) Veröffentlichungstag der Patentschrift: **07.06.95**

(51) Int. Cl.⁶: **A23L 1/2165**, A23L 1/164

(21) Anmeldenummer: **92105318.7**

(22) Anmeldetag: **27.03.92**

(54) **Fertigknödel auf Stärkebasis und Verfahren zu seiner Herstellung.**

(30) Priorität: **12.04.91 DE 4112082**

(43) Veröffentlichungstag der Anmeldung:
**19.11.92 Patentblatt 92/47**

(45) Bekanntmachung des Hinweises auf die
Patenterteilung:
**07.06.95 Patentblatt 95/23**

(84) Benannte Vertragsstaaten:
**AT CH DE ES FR LI NL**

(56) Entgegenhaltungen:
**DE-A- 1 921 648**
**DE-A- 2 412 600**
**DE-A- 3 503 831**

**WORLD PATENTS INDEX LATEST Week 8425,**
**Derwent Publications Ltd., London, GB;**
**AN84-154394 (25)**

(73) Patentinhaber: **PFANNI-WERKE OTTO ECKART KG**
**Grafinger Strasse 6**
**D-81671 München (DE)**

(72) Erfinder: **Kalsbach, Renate**
**Breitenloh 7**
**W-8137 Berg 2 (DE)**
Erfinder: **Pepperl, Thomas**
**Moosbauerweg 42**
**W-8190 Wolfratshausen (DE)**
Erfinder: **Pfeilstetter, Hons**
**Mobil-Oil-Strasse 53**
**W-8261 Ampfing (DE)**
Erfinder: **Henning, Rosina**
**Köhlerstrasse 12**
**W-8068 Pfaffenhofen (DE)**

(74) Vertreter: **Müller-Boré & Partner Patentanwälte**
**Postfach 26 02 47**
**D-80059 München (DE)**

EP 0 513 504 B1

**Beschreibung**

Die Erfindung betrifft einen neuartigen Fertigknödel, der nur durch 10-20-minütiges Einlegen in heißes Wasser von mehr als 60°C, also über der Verkleisterungstemperatur von Kartoffelstärke, ohne zusätzliche Manipulationen in den verzehrfertigen Zustand überführt wird.

Dies bedeutet eine wesentliche Erleichterung der Zubereitung, da man einfach Wasser aufkochen läßt, den Knödel einlegt und den Knödel 10 bis 20 min ziehen läßt, worauf der Knödel verzehrfertig ist.

Kochfertige Erzeugnisse, die durch Rehydratisieren mit heißem Wasser verzehrfähig gemacht werden, sind seit langem bekannt, z.B. Trockenproduke, die zu Kartoffelbrei oder zu Kartoffeln oder Semmelknödel verarbeitet werden können. Bei Knödel hat sich der sog. Kochbeutel gut bewährt also ein Beutel aus wasserdurchlässigem Material, der das nach Rehydratisierung den Knödel bildende üblicherweise flockige oder stückige Ausgangsmaterial enthält, das bei Erhitzen in Wasser durch den Quelldruck der quellenden Stärkebestandteile den Beutel unter leichtem Druck ausfüllt und somit einen schnittfesten Knödel formt.

Die Herstellung derartiger Erzeugnisse ist in der Literatur und der Patentliteratur vielfach beschrieben. Stellvertretend für diesen Stand der Technik sei auf die DE-PS 1936465 verwiesen, die ein Verfahren zur Herstellung von in heißem Wasser quellenden flockenförmigen Trockenprodukten auf Stärkebasis für die Zubereitung von Klößen im Kochbeutel zeigt. Weiterer Stand der Technik für Herstellungsverfahren für Trockenprodukte sind:

DE-PS 1251639 "Verfahren zum Herstellen getrockneter, in kochfesten, wasserdurchlässigen Beuteln abgefüllter und durch Kochen fertigzustellender Knödel",

DE-OS 3340354 "Verfahren zur Herstellung von in heißem Wasser quellbarem Kartoffeltrockengranulat",

DE-PS 1936465 "Verfahren zur Herstellung von in heißem Wasser quellenden flockenförmigen Trockenprodukten",

DE-OS 3401596 "Verfahren zur Herstellung von in heißem Wasser rehydratisierbaren, granulierten Trockenprodukten für Knödel",

DE-OS 3503831 "Instant-Kartoffeltrockengranulat und Verfahren zu dessen Herstellung",

DE-OS 3545031 "Knödel auf Brotbasis mit erhöhtem Balaststoffgehalt",

EP 0136335 "Mischung für Semmelknödel und Grundverfahren zu ihrer Herstellung".

Des weiteren gehört zum Stand der Technik ein rehydratisierbarer kompaktierter Riegel, wie er in der US-PS 3882253 beschrieben ist. Hier wird ein Riegel beschrieben, der aus 10 - 20 % gefriergetrockneten Kartoffeltrockenprodukten besteht und 80 - 90 % formgebende Komponenten (Trockenfrüchte, Nüsse, usw.) enthält. Dieser Riegel hat nach dem Kompaktieren eine Dichte von 1 - 1,4 g pro $cm^3$ und ist in kaltem Wasser rehydratisierbar.

In der US-PS 3489575 wird ein kartoffelpufferähnliches Produkt beschrieben, das hergestellt wird durch das Mischen von vorgekochten Kartoffel-Partikeln in einer Suspension vorgelatinisierter Stärke bei einem Wassergehalt von 75 - 80%, anschließendes Ausformen eines Puffers, Fritieren und Vakuumtrocknen auf kleiner als 3 % Wassergehalt. Dieses Produkt ist in diesem Zustand schnell rehydratisierbar und damit verzehrsfähig.

Für lagerfähige schnell zuzubereitende Fertigknödel ist also nach wie vor der bekannte Kochbeutelknödel die einfachste und schnellste Wahl. Dieser Knödel erfordert jedoch einen recht hohen Verpackungsaufwand, da der wasserdurchlässige Kochbeutelknödel, meistens in Paketen von sechs Knödeln, von einer luftdichten Hülle umgeben sein muß, welche die Knödel vor äußeren Einflüssen schützt und als Aussenverpackung weiterhin ein Karton verwendet werden muß, so daß eine dreifache Verpackung nötig ist.

Der hohe Verpackungsaufwand dieser Knödel in Kochbeuteln und eine gegenüber Verpackungen zunehmend kritischer werdende Verbaucherschaft machen es notwendig, diese Produktgruppe auf die Verminderung des Verpackungsaufwandes hin zu überarbeiten. Neben der Einsparung von Verpackungsmaterial sollte aber auch der Konvenientgrad, also der Grad der bequemen Anwendung des Produktes erhöht werden. Außerdem soll das neue Herstellungsverfahren die Möglichkeit bieten, neuartige Knödelprodukte, wie z.B. Knödel mit Füllungen, herzustellen. Als Füllungen kommen alle Trockenprodukte, also beispielsweise Granulate, Flockenpulver usw. in Frage, wobei für süße Varianten diverse Trockenfruchtpulver und -flocken/-granulate und für würzig-salzige Varianten getrocknete Käsepulver/-granulate, Trockengemüse oder pikante gewürzte Granulate oder Flocken genannt seien.

Aufgabe der Erfindung ist demnach die Bereitstellung eines Fertigknödels der geringeren Verpackungsaufwand erfordert als die bisher bekannten Kochbeutelknödel, höchstens in der gleichen Zeit, jedoch auf einfachere Weise verzehrfertig ist und überdies Varianten in der Ausgestaltung des Knödels gestattet.

Dieses Ziel wird erreicht, indem stärkehaltige Partikel, die zumindest zum Teil verkleistert sind, durch geeignete Maßnahmen, nämlich Kompaktieren, also Verdichten in die Endform gebracht werden, wobei das Endprodukt eine Dichte von 0,5 - 0,9, insbes. 0,6 - 0,75 g/$cm^3$ und einen Lückenraumanteil von 0,25 - 0,6, insbesondere 0,3 - 0,6 aufweist.

Derartige Knödel haben nach dem Rehydratisieren nicht nur eine schönere runde Form als die bekannten Kochbeutelknödel, die ja durch Aufreißen des Kochbeutels zwangsläufig etwas verformt werden, sondern in aller Regel auch kürzere Zubereitungszeiten.

Die Messung der oben erwähnten Dichte und des Lückenraumanteils sind am Ende der Beschreibung erläutert. Die hier genannte Dichte ist eine Dichte durch Verpressen, gemessen in $g/cm^3$, bei der alle von außen zugänglichen Lücken die größer als ein Senfkorn sind, vom Volumen abgezogen werden. Sie darf nicht mit der Schüttdichte bzw. Schüttgewicht verwechselt werden, die das Gewicht eines definierten Volumens eines freifließenden Materials einschließlich aller Lücken und Poren mitumfaßt. Die Dichte nach Verpressen ist also auch bei gleichem Feuchtigkeitsgehalt des Materials immer wesentlich höher als die Schüttdichte des gleichen, unverpressten freifließenden Materials.

Der Lückenraumanteil ist die Summe aller von außen für Tetrachlorkohlenstoff zugänglichen Hohlräume, die vom Gesamtvolumen abgezogen wird.

Die Kombination aus Dichte und Lückenraumanteil ergibt für die hier nötigen praktischen Produktionszwecke eine Art von "spezifischer Oberfläche", die wesentlich ist für die Schnelligkeit, mit der Wasser in den Knödel eindringen kann und mit der daraufhin die Quellung des Knödels erfolgt. Während bei einem Beutelknödel alle Teilchen, die ja freifließend sind, für den Wasserzutritt zugänglich sind, liegt im vorliegendem Fall ein Produkt aus einem Aggregat von stärkehaltigen Partikeln vor, die durch das Verpressen über Stärkebrücken fest miteinander verbunden sind und dann die obigen Werte für Dichte und Lückenraumarteil in Kombination aufweisen müssen.

Bei der Herstellung eines rehydratisierbaren Fertigknödels aus trockenen Stärkepartikeln sind zwei Grundprobleme zu überwinden:

1. Bei der Rehydratisierung (Kochen oder Ziehen) muß der Knödel vollständig und gleichmäßig über den ganzen Querschnitt durchfeuchtet werden, so daß die einzelnen Partikeln gleichmäßig zu einem Knödelteig ausquellen können. Es darf zu keinem übermäßigen Quellen (diese Gefahr besteht vor allem in der Randzone) und damit auch zu starkem Abkochen kommen. Ein zu starkes Quellen könnte eine zu sehr verdichtete Randzone oder gar einen zu sehr verdichteten Gesamtknödel bewirken, der nicht mehr hinreichend saugfähig ist, also im Innern trockene Stellen aufweist.

2. Das Bindevermögen des beim Kochen entstehenden Knödelteiges muß so groß sein, daß auch bei längerer Kochzeit ein Zerfallen des Knödels verhindert wird. Dieses Problem ist beim Kochbeutelknödel kaum gegeben und könnte jedenfalls erst nach dem Aufreißen des Beutels auftreten. Bei einem Knödel ohne Kochbeutel dagegen ist dies ein Hauptproblem, das auch aus der haushaltmäßigen Herstellung üblicher Knödel oder aus der Herstellung von Knödel aus den im Handel befindlichen nassen Frischmassen bekannt ist.

Der erfindungsgemäße Knödel und sein Herstellungsverfahren überwinden auch diese Probleme.

Das Herstellungsverfahren für einen Fertigknödel, das die obengenannten Probleme überwindet, sieht folgendermaßen aus:

a) Herstellung stärkehaltiger Partikel

Zur Herstellung der stärkehaltigen Partikel sind im Prinzip alle üblichen Herstellungsverfahren für Kochbeutelfüllungen geeignet. Bevorzugt werden jedoch Partikel mit einer glatten Oberfläche, wie z.B. Plättchen, Reisform, Ringe, Fadennudelformen.

Diese Produkte können hergestellt werden, indem stärkehaltige Mischungen mit einer Flüssigkeit (üblicherweise Wasser, jedoch bei gewissen z.B. gefüllten Knödeln auch Milch oder z.B. Rindsuppe) befeuchtet werden und anschließend mit Hilfe eines Extruders oder eines Walzwerks in eine definierte Form verpresst und geschnitten werden. Aber auch Brot,zerkleinert auf eine kleine Partikelgröße, kann als Ausgangsmaterial verwendet werden. Die Form der Partikel beeinflußt in starkem Maße die Dichte des entstehenden Knödels und in der Folge die Konsistenz des zubereiteten Knödels. Prinzipiell ist jede beliebige Partikelform verwendbar, wenn nach dem Formvorgang der fertige Knödel eine Dichte zwischen 0,5 und 0,9 $g/cm^3$ und einen Lückenraumanteil von 0,25 bis 0,6, insbesondere 0,3 bis 0,6, aufweist. Dar Feuchtegehalt dieser Stärkepartikel liegt normalerweise zwischen 3 und 12, insbesondere 3 bis 6 Gew.-%, so daß eine Lagerung vor der Weiterverarbeitung ohne weiteres möglich ist. Allgemein gilt für Kartoffelknödel, daß der Geschmackseindruck umso roher ist, je gröber die Teilchen sind, wobei natürlich aus praktischen Gründen, wenn kein besonders stückiger Charakter erzielt werden soll, eine Dicke der Teilchen bei dichten, z.B. extrudierten Teilchen von ca. 2 mm und bei porösen, z.B. Granulat-Teilchen, von 2 bis 3 mm nicht überschritten werden soll und wiederum aus praktischen Gründen die zweite und dritte Dimension kaum jemals länger als 1 cm sein wird, weil derartige Teilchen, z.B. in Fadennudelform bei der Verarbeitung von selbst in Stückchen von 5 bis 10 mm zerbrechen, obwohl natürlich hier eine größere Länge nicht stören würde.

b) Je nach der Herstellung der stärkehaltigen Partikel, fallen diese mehr oder weniger trocken an. Wenn der Feuchtigkeitsgehalt unter etwa 8 Gew.-% liegt, werden sie üblicherweise auf 8 -12 Gew.-% befeuchtet.

Vorzugsweise fallen die stärkehaltigen Partikel bei der Herstellung gemäß obigem Schritt a) mit einem Wassergehalt von zwischen 3 und 6 Gew.-% an, weil sie dann gut lagerfähig sind. Solche Partikel werden an der Produktoberfläche hinreichend befeuchtet, z.B. mit einer Wassermenge mit 2 bis 6 Gew.-%, bezogen auf die Partikelmasse an der Produktoberfläche, damit ihr Endwassergehalt zwischen 8 und 18, vorzugsweise 8 bis 15 und insbesondere zwischen 8 und 12 Gew.-% liegt.

Bei der Befeuchtung sind folgende Varianten zu nennen:
- mit kaltem Wasser
- mit heißem Wasser
- mit Dampf
- mit Wasser + verkleisterter Stärke
- mit Wasser + nativer Stärke
- mit Wasser + Eiweiß
- mit Wasser + modifizierter Stärke
- mit Fett bzw. Fettemulsion

Wenn dem Wasser Stärke oder modifizierte Stärke oder Eiweiß zugesetzt ist, ist deren Konzentration immer recht gering und beträgt vorzugsweise nicht mehr als 5 Gew.-% der Befeuchtungsflüssigkeit. Bei Befeuchtung mit Wasser und nativer Stärke wird die Temperatur beim Befeuchten natürlich unterhalb der Verkleisterungstemperatur gehalten, wogegen beim Befeuchten mit Wasser unter Zusatz von verkleisteter Stärke ohne Weiteres höhere Temperaturen angewandt werden können, sei es daß das Befeuchtungswasser höhere Temperaturen hat oder daß die Befeuchtung insgesamt in einer Umgebung mit höherer Temperatur vorgenommen wird.

Beim Befeuchten mit Wasser unter Eiweißzusatz wird vorzugsweise eine Gelatinelösung unterhalb der Denaturierungstemperatur verwendet. Das Befeuchten mit Wasser und modifizierter Stärke kann heiß oder kalt erfolgen, da die modifizierte Stärke als solche ja hitzefest ist. Die Temperatur hängt dann nur davon ab, ob man eine weitere Verkleisterung der Stärkepartikel will oder in Kauf nehmen kann oder nicht.

Auch die Verwendung von Fett bzw. Fettemulsion ist hier mitaufgeführt, obwohl dies natürlich keine echte Befeuchtung ist. Die Befeuchtung dient jedoch der Verbindung der stärkehaltigen Partikel, was auch durch Fett bewirkt wird, so daß hier diese Variante miteinbezogen wird, da sie gleichwirkend ist.

Selbstverständlich sind auch alle Kombinationen der obengenannten Verfahrensweisen möglich, soweit sie sich nicht aus praktischen Gründen ausschließen. Z.B. hat es wenig Sinn, mit Dampf und nativer Stärke zu arbeiten, da natürlich z.B. Sattdampf die native Stärke verkleistern würde.

c) Formen des Knödels

Während die stärkehaltigen Knödel, insbesondere bei einem Feuchtigkeitsgehalt von unterhalb 8, insbesondere 6 Gew.-% gut lagerfähig sind, sollte zwischen dem Befeuchten des Granulats und dem Ausformen des Knödels maximal eine Zeitspanne von 5 min, vorzugsweise weniger als 3 min und insbesondere 1 bis 2 min liegen, da sonst die an der Partikeloberfläche konzentrierte Feuchtigkeit in das Partikelinnere wandert und die Partikel an Haftfähigkeit verlieren. Das Ausformen des Granulats zu einem Knödel erfolgt bevorzugt in einer Kompaktierpresse bei einem Druck zwischen 1 - 10 kN. In der Praxis werden Drücke von 1 bis 5 kN bevorzugt, insbesondere 2 bis 3 kN, was jedoch auch formabhängig ist. Der angewendete Druck beim Kompaktieren beeinflußt die Dichte des entstehenden Trockenknödels. Durch die intensive Verpressung der oberflächlich befeuchteten Partikel gegeneinander werden die Haftkräfte vergrößert und die löslichen Bestandteile an der Oberfläche sintern bzw. kleben zusammen. Da nach kurzer Zeit das Wasser in das trockene Teilcheninnere diffundiert ist, erstarrt die Verbindung zwischen den einzelnen Teilchen. Durch den Zusatz von Stärke oder Eiweiß oder Fett wird das Verkleben der Teilchen verbessert.

Dieser Verfahrensschritt kann selbstverständlich auch auf Brikettierpressen oder Tablettierpressen durchgeführt werden. Entscheidend für das Entstehen eines rehydratisierbaren Knödels ist lediglich die entstehende Dichte, die zwischen 0,5 und 0,9 g/cm$^3$ liegen muß, und, je nach Teilchenform, eine Porosität bzw. einen Lückenraumanteil von 0,25 - 0,6, insbesondere von 0,3-0,6. Die auf diese Weise hergestellten Knödel sind so stabil, daß sie ohne weiteres verpackt werden können. Das Verpressen kann z.B. durchgeführt werden, indem eine Halbschale mit dem Stärkegranulat gefüllt wird. Wenn eine Füllung gewünscht wird, wird dann in der Mitte ein Häufchen der Füllung eingefüllt, wobei die Füllung natürlich auch schon vorher zu einer Kugelform verpreßt sein kann. Dann wird auf die Halbschale die zweite Hälfte der Befüllung aufgehäuft. Um einen genügend großen Füllkegel auf der ersten Halbschale zu erhalten, kann diese Halbschale in einem Hohlzylinder sitzen, was verhindert, daß ein Teil der zweiten Hälfte der Befüllung über den Rand der unteren Halbkugelschale fällt. Dann wird die zweite Halbkugelschale von oben ausgedrückt.

d) Trocknen

(nicht notwendig, wenn der verpreßte Knödel einen Wassergehalt kleiner als 10 % für kürzere Lagerzeiten und kleiner als 8 % für längere Lagerzeiten aufweist)

Falls das zum Kompaktieren verwendete Granulat einen Wassergehalt von mehr als 10 % aufweist, kann es notwenig sein, den entstandenen Fertigknödel auf einen Wassergehalt kleiner als 10 %, insbesondere kleiner 8%, durch konventionelle Konvektionstrocknung herunter zu trocknen, um ihn lagerfähig zu machen.

Die folgenden Beispiele erläutern die Erfindung.

Beispiel 1

Quarkknödel

Zusammensetzung der Vormischungen:

| Vormischung 1 | |
|---|---|
| festes Pflanzenfett | 4 Gew.-Teile |
| Quarkaroma | 0,1 Gew.-Teile |

Diese Vormischung 1 wird, wie nachstehend angegeben, mit der Vormischung 2 kombiniert.

| Vormischung 2 | |
|---|---|
| Magerquark | 30 Gew.-Teile |
| Retentat (ultrafiltriertes Molkeneiweiß) | 3 Gew.-Teile |
| Vormischung 1 | 2,5 Gew.-Teile |

| Vormischung 3 | Gew.-Teile |
|---|---|
| Kartoffelpüreeflocken | 7 |
| Weizengrieß | 22 |
| Saccharose | 10,5 |
| Backpulver | 2 |
| Instant-Mehl (Typ 405) (vorgekochtes Weizenmehl) | 7 |
| Quarkpulver, gefriergetrocknet, | 7 |
| Weizenmehl (Typ 550) | 5 |

Daneben sind in Vormischung 3 noch die auf diesem Fachgebiet bekannten üblichen Zutaten, wie Emulgatoren, Geschmacksverstärker, Geschmacksstoffe und Eiweiß und Stärken in geringen Mengen vorhanden, die insgesamt ca. 4 Gew.-% nicht übersteigen. Wenn man die oben angegebenen Mengen an Vormischung 2 (einschließlich Vormischung 1) und Vormischung 3 statt in Gew.-Teilen in % angibt, ergeben sich 96 %, welche durch die bis zu 4 % weiteren Zusätze auf 100 % kommen. Da die Menge dieser üblichen weiteren Zutaten schwankt, sind die Mengen der Vormischungen eben in Gew.-Teilen angegeben, da dies ein absolutes Maß ist.

Verfahrensablauf

Die Vormischung 1 wird in einem Behälter mit schnelllaufendem Rührwerk gleichmäßig verrührt. Anschließend werden Vormischung 1 und Vormischung 2 in einem Diosna-Mischer (einarmiger Mischer mit umlaufendem Rührbehälter) schonend vermischt. Die so hergestellte Mischung wird nun mit Hilfe einer Mohno-Pumpe oder einer schonend arbeitenden Schnecke in einen kontinuierlichen Granulator (länglicher Trog mit Misch- und Förderpaddeln) eingespeist. Gleichzeitig wird über eine Bandwaage ein adäquater Teil der Vormischung 3, die gesonder vorgemischt worden war, zugespeist. Während des Misch- und Fördervorganges im Granulator entsteht nun ein weicher, brösliger Teig. Der erhaltene Teig hat einen Wassergehalt von 30 bis 40 Gew.-%, meist ca. 35 Gew.-% und bildet eine Art Granulat, also Kügelchen mit rauher Oberfläche. Dieses Granulat wird nun entweder direkt abgesiebt, wobei das Granulat mit einer Teilchengröße von 0,5 mm bis 2 mm ausgesiebt und der Rest zur weiteren Granulierung zurückgeführt oder einem zweiten Granulat dazugeführt wird oder er wird einer Wirbelschichtmaschine zugeführt, nämlich einer Passiervorrichtung zur Herstellung von Parikeln bestimmter Größe (mit Siebeinsatz), wo wiederum eine bestimmte gewünschte Größe (ca. 0,5 mm bis 2 mm) als Produkt gewonnen werden kann.

Das hierbei erhaltene Teiggranulat ist recht porös und wird nun direkt einem Trockner, zweckmäßig einem Wirbelschichttrockner zugeführt und in bekannter Weise bei etwa 70 °C auf einen Endwassergehalt von ca. 6 bis 12 % Gew.-% getrocknet.

Wie schon erwähnt, sind diese Granulate bei einem Endwassergehalt von 8 Gew.-% oder weniger gut lagerfähig.

Vor dem Kompaktieren wird das Agglomerat bzw. Granulat, je nach Feuchtigkeitsgehalt mit 2 bis 6 Gew.-%, bezogen auf Partikelmasse auf einen Gesamtwassergehalt von 8 bis 18, insbesondere 8 bis 15 und vorzugsweise 8 bis 12 Gew.-% gleichmäßig befeuchtet. Wenn man auf 6 Gew.-% getrocknet hat, wird mit ca. 3 bis 6 Gew.-% Wasser befeuchtet. Anschließend wird sofort, d.h. innerhalb von höchstens 5 min, vorzugsweise 1 bis 3, und insbesondere 1 bis 2 min, in einer Kompaktierpresse verpreßt. Die Kompaktierpresse weist einen kugelförmigen Hohlraum mit einem Durchmesser von 50 mm auf, die eingewogene Granulatmenge betrug 45 g und das Verpressen zu einem Knödel erfolgte mit einem Druck von 3,5 kN bis auf eine Dichte von 0,73 g/cm$^3$. Wegen des hohen Eiweißanteils (Quark) liegt hier der Preßdruck etwas höher als die sonst üblichen 2 bis 3 kN.

Der erhaltene Knödel weist einen Endwassergehalt von ca. 9 Gew.-% auf und ist damit in verpacktem Zustand lagerfähig.

Die Zubereitung des Knödels erfolgt durch Einlegen in kochendes Wasser und ca. 15-minütiges Garen. Nach diesem Zeitraum kann ein servierbereiter Knödel mit einem Endgewicht von ca. 110 g aus dem Kochtopf entnommen werden. Der Ausdruck Garen bedeutet, daß der Topf mit dem kochenden Wasser nach Einlegen des Knödels oder der Knödel von der Heizplatte genommen werden kann, also während der 15-minütigen Garungszeit das Wasser nicht mehr Kochen muß, jedoch seine Temperatur über der Verkleisterungstemperatur liegen soll.

Bei eiweißhaltigen Knödeln wie dem soeben beschriebenen Quarkknödel gilt allgemein, daß das Granulat umso langsamer quillt, je mehr Eiweiß im Knödel enthalten ist und die Quellung umso schneller erfolgt, je größer die Oberfläche der Einzelteilchen ist. Allgemein gilt, daß langsam quellende Binder, also Zusätze wie Eiweiß, fetthaltige Coatings oder langsam anquellende Spezialstärken (Quellstärken), die ja beim Trocknen etwas verhornen, die Quellung der Einzelteilchen verzögern.

Beispiel 2

Kartoffelknödel

Zunächst wird eine Mischung aus folgenden Bestandteilen hergestellt:

|  | kg |
|---|---|
| - vermahlene Trockenkartoffeln (nur blanchiert) | 26 |
| - Trocken-Püreeflocken | 26 |
| - native Kartoffelstärke | 30 |
| - vorverkleisterte Maisstärke | 21 |
| - Speisesalz | 3 |

Diese Mischung wird durch Zugabe von Wasser auf einen Endwassergehalt von 38 % befeuchtet und homogen gemischt. Mit Hilfe eines konventionellen Nudelextruders wird aus der oben beschriebenen Mischung ein Ganulat verpreßt. Als Formmatrize dient eine Makkaroni-Matrize, das Preßgut wird mit Hilfe eines umlaufenden Messers an der Düse geschnitten, so daß Ringe mit einem Durchmesser von 3 mm und einer Banddicke von 0,5 mm entstehen. Das so erhaltene Granulat wird auf einen Endwassergehalt von 5 % getrocknet.

Zur Herstellung des Fertigknödels wird dieses Granulat mit einer Weizenmehl-Wassersuspension (4 % Wasser / 1 % Weizenmehl, bezogen auf das Granulatgewicht) becoatet (was einen Gesamtwassergehalt von ca. 9 Gew.-% ergibt) und anschließend in einer Kompaktierpresse bei einen Druck von 2 kN in eine Knödelform verpreßt. Die Dichte des fertig verpreßten Knödels beträgt 0,74 g/cm$^3$, der Endwassergehalt 8,7

%. Das erhaltene Produkt ist sehr stabil und kann ohne weiteres automatisch in Verpackungsmaschinen eingelegt werden.

Beispiel 3

Kartoffelknödel mit Rohcharakter

Es wird eine Vormischung aus folgenden Komponenten hergestellt:

|  | kg |
|---|---|
| - vermahlene Trockenkartoffeln (nur blanchiert) | 40 |
| - Trocken-Püreeflocken | 30 |
| - native Kartoffelstärke | 20 |
| - Maisstärke | 7 |
| - Speisesalz | 3 |

Die erhaltene Mischung wird auf einen Endwassergehalt von 33 Gew.-% befeuchtet und anschließend ca. 2 min geknetet. Die erhaltene Masse wird daraufhin einem Walzwerk zugeführt, auf dem ein etwa 0,7 mm starker Film ausgewalzt wird, der in Streifen von 7 x 1 mm geschnitten wird und anschließend auf einen Wirbelschichttrockner auf einen Endwassergehalt von 6 Gew.-% getrocknet wird.

Das Granulat wird mit 3 bis 4 Gew.-% Wasser, bezogen auf das Granulatgewicht, befeuchtet und anschließend kompaktiert.

Das Kompaktieren erfolgt, indem 20 g des befeuchteten Granulats in die Kompaktierform dosiert werden und darauf ins Zentrum 5 g geröstete, getrocknete Weißbrotwürfel abgelegt werden und weitere 20 g Kartoffelgranulat darauf dosiert werden. Danach wird bei einem Druck von 2 kN ca. 10 sec lang gepreßt.

Das Ergebnis ist ein Knödel mit einer Dichte von 0,7 g/cm$^3$, der in seinem Zentrum Weißbrotwürfel als Füllung enthält. Die Dichte ist also wegen der Füllung bei etwa gleichem Endwassergehalt etwas geringer.

Beispiel 4

62 kg Semmelbrotwürfel mit einer Korngröße zwischen 2 und 5 mm werden in einen Mischer eingebracht und mit folgenden Komponenten gemischt:
- 0,23 kg Petersilie getrocknet
- 0,7 kg Kochsalz
- 3 kg Vollei (trocken)
- 1,5 kg Gewürze
- 10 kg native Stärke
- 22,6 kg Magermilch

Die Semmelbrotwürfel sollten in einer Dimension dünn sein, d.h. nicht mehr als 2 bis 3 mm dick sein.

Die Magermilch wird aufgesprüht, wodurch sich während des Mischvorgangs ein Agglomerat ausbildet. Das Agglomerat wird bei 70° auf einem Wirbelschichttrockner auf einen Endwassergehalt von 5 % getrocknet.

Das erhaltene Agglomerat wird mit 5 % Wasser, bezogen auf die Agglomeratmenge, befeuchtet und sofort in der Kompaktierpresse bei einem Druck von 3,5 kN verpreßt. Der erhaltene Knödel weist eine Dichte von 0,79 auf und ergibt nach Zubereitung ein Produkt mit ausgezeichneter Semmelknödelkonsistenz.

Die Dichte des verpreßten und ggfs. auf maximal 9 % getrockneten Knödels, soll, wie eingangs erwähnt, 0,5 bis 0,9 g/cm$^3$ haben, wobei eine Dichte von 0,6 bis 0,75 g/cm$^3$ bei Kartoffelknödel ohne zusätzliche Füllung bevorzugt ist. Bei Semmelknödel wurde in weiteren Beispielen festgestellt, daß bei etwas stärkerem Befeuchten (10 bis 12 Gew.-% Gesamtfeuchtigkeit) mit Preßdrücken von 2 bis 3 kN die Dichte ca. 0,7 g/cm$^3$ oder nur wenig darüber beträgt. Der Knödel ist nach Zubereitung etwas lockerer.

Bevorzugt werden, jedenfalls bei Kartoffelknödel, Partikel mit relativ glatter, also kleinerer Oberfläche. Bei Endprodukten mit einer Dichte unterhalb 0,5 g/cm$^3$ besteht beim Kochen des Knödels die Gefahr, daß er zerfällt, während er bei Dichten über 0,9 g/cm$^3$ zu dicht wird und im Innern trockene Stellen aufweist.

Wichtig für die Konsistenz sowie geschmackliche und Bißakzeptanz des fertigen Knödels ist auch die Porosität des verpreßten Knödels, die natürlich in gewisser Weise mit der Dichte in Beziehung steht. Eine Porosität, d.h ein Lückenraumanteil (Volumen Hohlräume/Gesamtvolumen) von 0,25 bis 0,6, insbesondere 0,3 bis 0,6 ist zur Erzielung eines akzeptablen Endproduktes wesentlich. Der bevorzugte Bereich liegt für Kartoffelknödel zwischen 0,35 und 0,45 und bei Kartoffelknödel, die frei von Fremdfüllung sind, insb. bei ca. 0,4. Bei Semmelknödel liegt der bevorzugte Bereich bei 0,3 bis 0,4. Hierbei ist auch die Porosität der Teilchen selbst insoweit enthalten, als sie mit $CCl_4$ mitgemessen wird, also nach außen offene, hinreichend große Poren.

Wenn beim Verpressen des Granulats der Wassergehalt dieses zu verpressenden Granulats gesteigert wird, werden die Granulatpartikel elastischer und es entsteht mit zunehmendem Wassergehalt ein Knödel steigender Dichte, die Hohlräume zwischen den Granulatteilchen nehmen ab, d.h. der Lückenraumanteil wird kleiner. Daher wird bei Feuchtigkeitsgehalten von 8 bis 18, insbesondere 8 bis 15 Gew.-% auf Dichten von 0,5 - 0,9 $g/cm^3$, insbesondere 0,6 - 0,75 $g/cm^3$ verpreßt, was, wie erwähnt, einem Lückenraumanteil von 0,25 - 0,6, vorzugsweise 0 3 - 0,5 und insbesondere bei Kartoffelknödel von 0,35 - 0,45 entspricht.

Die Wasseraufnahme ist eine lineare Funktion der Dichte und des Lückenraumanteils bei praktisch gleicher Partikelform und Mischung.

Bei normalen Kochbeutelknödel, wie sie jetzt im Handel sind, beträgt die Schüttdichte unter 0,6 $g/cm^3$, nämlich ca. 0,25 - 0,55, während z.B. bei Flockenpüree die Schüttdichte 0,3 beträgt. Da bekanntlich die Rehydratisierung, also die Wasseraufnahme pro Zeiteinheit, auch von der Form der Einzelteilchen, also des Granulats abhängt, ist eine gleichmäßige Form der Einzelteilchen und damit der Poren oder Hohlraumverteilung im Produkt bevorzugt, um eine gleichmäßige Struktur des rehydratisierten Fertigknödels und damit einen gleichmäßigen Biß und Geschmack zu liefern. Für praktische Zwecke sei darauf verwiesen, daß die Schüttdichte des Ausgangsmaterials, also des freifließenden unverpreßten Granulats, 0,35 bis 0,6 $g/cm^3$ beträgt, also stark unterhalb der Dichte des verpreßten Knödels, die ja wegen des Vorliegens von Leerräumen ebenfalls eine Art (gepreßte) Schüttdichte ist.

Zur Teigzusammensetzung ist noch zu sagen, daß bei Erhöhung des Kartoffelanteils und Verminderung des Anteils an (freier) Stärke durch das Material der Zellwände der Rohfasergehalt und somit auch die Wasseraufnahme steigt. Bei üblichen Kartoffelknödeln, wie sie in Beispiel 2 und 3 gezeigt sind, liegt die Wasseraufnahme bei ca. 1 : 2,6 Gew.-Teile unhydratisierter Fertigknödel/Endgewicht nach dem Rehydratisieren.

Die erfindungsgemäßen Knödel erfordern gegenüber dem Beutelknödel zumindest eine Verpackung weniger, da die Verpackung des Einzelknödels entfällt. Es genügt, die gewünschte Anzahl (z.B. 6) von Knödeln in einem Beutel oder in einer Faltschachtel zu verpacken.

Abschließend werden noch die Bestimmungsverfahren für die Knödeldichte und die Porosität angegeben.

1.Dichtebestimmung ( = Raumgewicht)

```
- Knödelgewicht (g)                                        : A
- Gewicht Becherglas + Senfkörner                          : B
  randvoll gefüllt/ 2 min gerüttelt (g)
- Gewicht Becherglas + Senfkörner
  + Knödel randvoll gefüllt/ 2 min gerüttelt               : C
- Korrekturfaktor Schüttgewicht Senfkörner (g/cm³)         : f
```

$$\text{Dichte } (g/cm^3) \qquad \frac{A \times f}{\left[B - (C - A)\right]}$$

2. Porosität ( = Lückenraumanteil)

Statt Porosität erscheint es sinnvoller im vorliegenden Fall von Lückenraumanteil zu sprechen (Lehrbuch "Verfahrenstechnik" von Kurt Schiefer, Rowohlt-Verlag, S. 363 "Porenvolumen" und S. 309, "Lückenraumanteil")

- Volumen des Knödels ($cm^3$)          : $\underline{B - (C - A)}$
$$f$$

siehe oben

- Volumen Meßzylinder mit 100ml
Tetrachlorkohlenstoff-Vorlage
+ Knödel ($cm^3$)              : D

Lückenraumanteil :    $1 - \dfrac{D - 100}{\dfrac{B - (C - A)}{f}} = \dfrac{\text{Volumen Hohlräume}}{\text{Gesamtvolumen}}$

**Patentansprüche**

1. Fertigknödel auf Stärkebasis, der durch kurzzeitiges Einlegen in heißes Wasser von mindestens Verkleisterungstemperatur, also bei mehr als 60°C ohne zusätzliche Manipulation in den verzehrfertigen Zustand überführbar ist, dadurch gekennzeichnet, daß er ganz oder überwiegend aus einem, in die gewünschte Form verpreßten Aggregat von stärkehaltigen Partikeln besteht, deren Stärke zumindest zum Teil verkleistert ist, wobei das verpreßte Endprodukt eine Dichte von 0,5-0,9 insbesondere 0,6 - 0,75 $g/cm^3$ und einen Lückenraumanteil von 0,25 - 0,6, insbesondere 0,3-0,6 aufweist und eine von den stärkehaltigen Teilchen verschiedene Füllung in einer Menge unter 50 % der Gesamtmasse aufweisen kann, wobei der Knödel gegebenenfalls soweit getrocknet ist, daß er lagerfähig ist.

2. Knödel nach Anspruch 1, dadurch gekennzeichnet, daß die Stärke ganz oder überwiegend Kartoffelstärke ist.

3. Knödel nach Anspruch 1 oder 2, dadurch gekennzeichnet, daß er eine Dichte von 0,6-0,75 $g/cm^3$ und einen Lückenraumanteil von 0,3 - 0,4 für Semmelknödel und 0,35-0,45 für Kartoffelknödel aufweist.

4. Knödel nach einem oder mehreren der Ansprüche 1 bis 3, dadurch gekennzeichnet, daß er ganz oder überwiegend aus stärkehaltigen Partikeln gleichmäßiger Form und Konsistenz besteht.

5. Knödel nach einem oder mehreren der Ansprüche 1 bis 4, dadurch gekennzeichnet, daß die stärkehaltigen Partikel, aus denen er ganz oder überwiegend besteht, in einer Dimension eine Abmessung von nicht mehr als ca. 2 mm aufweisen, wenn es sich um dichte, z.B. extrudierte Teilchen mit glatter Oberfläche handelt, während bei porösen Teilchen, z.B. Granulat, die Abmessung in einer Dimension 2-3 mm nicht übersteigt.

6. Knödel nach Anspruch 1 bis 5, dadurch gekennzeichnet, daß er einen Wassergehalt von höchstens 10 Gew.-%, vorzugsweise höchstens 8 Gew.-% aufweist.

7. Verfahren zur Herstellung der Fertigknödel nach Anspruch 1 bis 6 durch an sich bekannte Bildung von stärkehaltigen Partikeln mit einer Abmessung in einer Dimension von nicht mehr als 2 mm bei dichtem Material und nicht mehr als 2-3 mm bei porösem Material, und Aggregieren der stärkehaltigen Partikel, ggfs. unter Einbringung einer Füllung, dadurch gekennzeichnet, daß man die stärkehaltigen Partikel erforderlichenfalls auf einen Feuchtigkeitsgehalt von 8 bis 18, vorzugsweise 8 bis 15 und insbesondere 10 bis 12 Gew.-% befeuchtet und anschließend sofort in der gewünschten Form auf eine Dichte von 0,5 bis 0,9 $g/cm^3$ und einen Lückenraumanteil von 0,25 bis 0,6, insbesondere 0,3 bis 0,6 verpreßt.

8.  Verfahren nach Anspruch 7, dadurch gekennzeichnet, daß man die Größe der stärkehaltigen Partikel und der eventuellen Füllung sowie den Preßdruck so wählt, daß sich bei einer Dichte von 0,6 bis 0,75 g/cm$^3$ ein Lückenraumanteil von 0,3 bis 0,4 bei Semmelknödel und 0,35 bis 0,45 bei Kartoffelknödel einstellt.

9.  Verfahren nach Anspruch 7 oder 8, dadurch gekennzeichnet, daß man mit einem Druck von 1 bis 10 kN, insbesondere 1 bis 5kN verpreßt.

10. Verfahren nach einem oder mehreren der Ansprüche 7 bis 9, dadurch gekennzeichnet, daß man als stärkehaltige Partikel ganz oder überwiegend solche mit gleichmäßiger Form und Konsistenz, insbesondere solche mit glatter Oberfläche verwendet.

11. Verfahren nach einem oder mehreren der Ansprüche 7 bis 10, dadurch gekennzeichnet, daß man beim Befeuchten einen Binder, insbesondere verkleisterte, native oder modifizierte Stärke und/oder Eiweiß dem Befeuchtungswasser zusetzt oder mit Fett bzw. Fettemulsion befeuchtet.

**Claims**

1.  Instant starch-based dumpling which can be converted into the ready-to-eat state by a short immersion in hot water of at least gelatinization temperature, that is at more than 60°C, without additional manipulation, characterized in that the instant dumpling is wholly or predominantly composed of an aggregate of starch-containing particles pressed into the desired shape, the starch content of which particles is at least partially gelatinized, the compressed end product having a density of 0.5-0.9, in particular 0.6-0.75 g/cm$^3$ and an interstitial space fraction of 0.25-0.6, in particular 0.3-0.6, and being able to have a filling different from the starch-containing particles in an amount below 50 % of the total mass, the dumpling, if appropriate, being dried to the extent that it is storage-stable

2.  Dumpling according to Claim 1, characterized in that the starch is wholly or predominantly potato starch.

3.  Dumping according to Claim 1 or 2, characterized in that it has a density of 0.6-0.75 g/cm$^3$ and an interstitial space fraction of 0.3-0.4 for bread dumplings and 0.35-0.45 for potato dumplings.

4.  Dumpling according to one or more of Claims 1 to 3, characterized in that it is wholly or predominantly composed of starch-containing particles of uniform shape and consistency.

5.  Dumpling according to one or more of Claims 1 to 4, characterized in that the starch-containing particles of which it is wholly or predominantly composed have, in one dimension, a measurement of no more than approximately 2 mm when they are dense, e.g extruded, particles having a smooth surface, whereas in the case of porous particles, e.g. granules, the measurement in one dimension does not exceed 2-3 mm.

6.  Dumpling according to Claims 1 to 5, characterized in that it has a water content of at most 10 % by weight, preferably at most 8 % by weight.

7.  Process for producing the instant dumpling according to Claims 1 to 6 by formation known per se of starch-containing particles having a measurement in one dimension of no more than 2 mm in the case of dense material and no more than 2-3 mm in the case of porous material and aggregation of the starch-containing particles, if appropriate with introduction of a filling, characterized in that the starch-containing particles are moistened, if necessary, to a moisture content of 8 to 18, preferably 8 to 15, and in particular 10 to 12, % by weight and are then immediately compressed in the desired shape to a density of 0.5 to 0.9 g/cm$^3$ and an interstitial space fraction of 0.25 to 0.6, in particular 0.3 to 0.6.

8.  Process according to Claim 7, characterized in that the size of the starch-containing particles and any filling as well as the pressing force are chosen in such a way that at a density of 0.6 to 0.75 g/cm$^3$ an interstitial space fraction of 0.3 to 0.4 is established in the case of bread dumplings and of 0.35 to 0.45 is established in the case of potato dumplings.

9. Process according to Claim 7 or 8, characterized in that pressing is performed at a force of 1 to 10 kN, in particular 1 to 5 kN.

10. Process according to one or more of Claims 7 to 9, characterized in that the starch-containing particles used are wholly or predominantly those having uniform shape and consistency, in particular those having a smooth surface.

11. Process according to one or more of Claims 7 to 10, characterized in that during moistening a binder, in particular gelatinized, native or modified starch and/or protein is added to the moistening water or moistening is performed with fat or fat emulsion.

**Revendications**

1. Boulette finie à base d'amidon qu'on peut amener dans un état prêt à consommer en l'introduisant pendant une courte durée dans de l'eau chaude, au moins à la température de gélatinisation, donc à plus de 60°C, sans autre manipulation, caractérisée en ce qu'elle est entièrement ou essentiellement formée d'un agrégat de particules contenant de l'amidon, qui est comprimé en la forme souhaitée, dont l'amidon est au moins partiellement transformé en empois, le produit fini comprimé ayant une densité de 0,5 à 0,9, en particulier de 0,6 à 0,75 g/cm$^3$ et une proportion de vides de 0,25 à 0,6, en particulier de 0,3 à 0,6, et pouvant contenir une garniture différente des particules contenant de l'amidon, en une quantité de moins de 50 % de la masse totale, la boulette pouvant éventuellement être séchée jusqu'à ce qu'elle soit apte à être stockée.

2. Boulette selon la revendication 1, caractérisée en ce que l'amidon est entièrement ou essentiellement constitué de fécule de pommes de terre.

3. Boulette selon la revendication 1 ou 2, caractérisée en ce qu'elle a une densité de 0,6 à 0,75 g/cm$^3$ et une proportion de vides de 0,3 à 0,4 pour des boulettes à base de chapelure (*Semmelknödel*) et de 0,35 à 0,45 pour des boulettes à base de pommes de terre.

4. Boulette selon une ou plusieurs des revendications 1 à 3, caractérisée en ce qu'elle est entièrement ou essentiellement constituée de particules contenant de l'amidon, de forme et de consistance identiques.

5. Boulette selon une ou plusieurs des revendications 1 à 4, caractérisée en ce que les particules contenant de l'amidon, qui la composent entièrement ou essentiellement, ne mesurent pas plus d'environ 2 mm dans une dimension quand il s'agit de particules denses, par exemple extrudées, avec une surface lisse, tandis que des particules poreuses, par exemple des granules, ne mesurent pas plus de 2 à 3 mm dans une dimension.

6. Boulette selon l'une des revendications 1 à 5, caractérisée en ce qu'elle contient au plus 10 % en poids d'eau, de préférence au plus 8 % en poids.

7. Procédé de préparation des boulettes finies selon les revendications 1 à 6, comprenant les étapes consistant à former d'une manière connue en soi des particules contenant de l'amidon, ne mesurant pas plus de 2 mm dans une dimension dans le cas d'une substance dense et pas plus de 2 à 3 mm dans le cas d'une substance poreuse, et l'agrégation des particules contenant de l'amidon, éventuellement avec l'introduction d'une garniture dans celles-ci, caractérisé en ce qu'on humidifie les particules contenant de l'amidon quand cela est nécessaire, jusqu'à l'obtention d'une teneur en humidité de 8 à 18, de préférence de 8 à 15 et en particulier de 10 à 12 % en poids, et ensuite, on les comprime directement en leur donnant la forme souhaitée, à une densité de 0,5 à 0,9 g/cm$^3$ et avec une proportion de vides de 0,25 à 0,6, en particulier de 0,3 à 0,6.

8. Procédé selon la revendication 7, caractérisé en ce qu'on choisit la dimension des particules contenant de l'amidon et de la garniture éventuelle, ainsi que la force de compression, d'une manière telle que pour une densité de 0,6 à 0,75 g/cm$^3$, on obtient une proportion de vides de 0,3 à 0,4 pour des boulettes à base de chapelure et de 0,35 à 0,45 pour des boulettes à base de pommes de terre.

9.  Procédé selon la revendication 7 ou 8, caractérisé en ce qu'on effectue la compression à une pression de 1 à 10 kN, en particulier de 1 à 5 kN.

10. Procédé selon une ou plusieurs des revendications 7 à 9, caractérisé en ce qu'on utilise, comme particules contenant de l'amidon, uniquement ou essentiellement des particules ayant une forme et une consistance identiques, en particulier avec une surface lisse.

11. Procédé selon une ou plusieurs des revendications 7 à 10, caractérisé en ce qu'on ajoute un liant pendant l'humidification, en particulier de l'amidon transformé en empois, de l'amidon en aiguilles ou de l'amidon modifié et/ou de l'albumine, à l'eau d'humidification, ou on effectue l'humidification avec de la graisse ou une émulsion grasse.